# FASCICULE DE BREVET EUROPEEN

(11) **EP 1 710 124 B1**
(45) Date de publication et mention de la délivrance du brevet: **19.03.2008**
(21) Numéro de dépôt: 06112120.8
(22) Date de dépôt: 31.03.2006
(51) Int. Cl.: B60R 5/04

(54) **Dispositif cache-bagages pour véhicule automobile, et véhicule automobile correspondant**
Rollo für Laderaumabdeckung für ein Kraftfahrzeug und hiermit ausgestattetes Fahrzeug
Vehicle boot cover and vehicle equipped therewith

(30) Priorité: 07.04.2005 FR 0503495
(43) Date de publication de la demande: 11.10.2006
(73) Titulaire: WAGON SAS, 79302 Bressuire Cédex (FR)
(72) Inventeur: Fourel, Pascal, 35400 Saint Malo (FR)
(74) Mandataire: Bioret, Ludovic

(56) Documents cités:
- DE-U1- 20 315 395
- FR-A- 2 714 342
- US-A1- 2004 119 307
- US-B1- 6 231 096

## Description

Le domaine de l'invention est celui des véhicules automobiles, et en particulier des véhicules de type « monospace » ou « break », ayant un hayon arrière articulé au voisinage du pavillon du véhicule, selon un axe horizontal perpendiculaire à l'axe de roulage du véhicule, ou une ou deux portes arrière. Elle peut également s'appliquer aux véhicules de type « pick-up ».

Ces véhicules présentent un espace destiné à recevoir des bagages (on englobe bien sûr sous ce terme les bagages au sens strict, mais également tout colis, objet, produit,... susceptible d'être transporté dans un véhicule). Cet espace est généralement défini par le dossier de la banquette arrière du véhicule, les bords latéraux du véhicule et le hayon, ou la portière, en position fermée.

Depuis longtemps, on recouvre cet espace par une tablette amovible, qui permet notamment de cacher le contenu de cet espace de stockage de bagages. On a également proposé des rideaux cache-bagages, montés sur un tube à enrouleur, et que l'on peut déployer au-dessus de cet espace.

US 2004/0119307 A1 décrit un dispositif cache-bagages, selon le préambule de revendication 1, comprenant un tube d'enroulement qui est monté détachable et orthogonale sur un paroi latérale de véhicule.

Cette technique est relativement efficace, et esthétique. Cependant, elle présente des inconvénients.

En effet, le rideau en position repliée reste généralement solidarisé au dossier des sièges arrière du véhicule.

En conséquence, même lorsque le rideau d'occultation est en position repliée, enroulé autour du tube à enrouleur, la présence du store replié limite l'espace utile du coffre (délimité par le dossier de la banquette arrière, les parois latérales du véhicule et le hayon en position fermée) et empêche d'optimiser son utilisation lors du chargement d'objets dans le véhicule.

Un premier objectif de l'invention est de pallier cet inconvénient de l'art antérieur.

Plus précisément, un objectif de l'invention est de fournir un dispositif cache-bagages à rideau d'occultation mobile pour véhicule qui ne limite pas l'espace utile du coffre tel que défini précédemment.

Un autre inconvénient particulier des techniques de l'art antérieur prévoyant un rideau d'occultation monté au niveau de la banquette arrière est que lorsque le rideau est replié et que l'utilisateur du véhicule souhaite augmenter l'espace utile pour charger des objet encombrant en rabattant la banquette arrière, le dispositif (ou store) cache-bagages fixé au dossier est gênant.

En effet, le boîtier du rideau forme une saillie sur la surface de chargement.

La présence de celui-ci est alors gênante, non seulement pour utiliser l'espace, mais également pour charger par exemple un objet lourd qui, posé sur le dispositif, pourrait l'endommager.

De plus, on comprend que cet inconvénient est d'autant plus gênant que la plupart des véhicules permettent de rabattre de façon indépendante une partie de la banquette arrière ou son intégralité, et que la présence d'un dispositif cache-bagages fixé au dossier pose des problèmes pour exploiter cette fonction.

Ainsi, un autre objectif de l'invention est de proposer une technique selon laquelle le cache-bagages ne limite pas l'espace de chargement lorsque la banquette arrière est rabattue et qui ne risque pas d'être endommagé par le chargement.

Les techniques de l'art antérieur ont également envisagé la possibilité de monter le store cache-bagages de manière amovible, de sorte qu'il ne soit pas endommagé lors du chargement de l'espace-bagages et qu'il ne limite pas l'espace utile.

Cependant, le dispositif une fois enlevé doit être stocké, ce qui peut être gênant, d'autant qu'il est alors possible de l'oublier chez soi en partant par exemple. Un objectif de l'invention est également de pallier cet inconvénient.

Encore un autre inconvénient particulier des techniques de l'art antérieur est qu'elles ne permettent pas de choisir d'occulter une zone particulière de l'espace arrière du véhicule. En effet, le rideau est limité aux positions dans lesquelles il est replié, déployé, ou partiellement déployé.

Ainsi, encore autre objectif particulier de l'invention, auquel répondent certains modes de réalisation, est de fournir un dispositif cache-bagages qui permette une occultation modulable de l'espace destiné aux bagages.

Ces objectifs, ainsi que d'autres qui apparaîtront par la suite, sont atteints à l'aide d'un dispositif cache-bagages pour véhicule automobile comprenant au moins un rideau d'occultation principal monté sur un tube d'enroulement principal.

Selon l'invention, ledit tube d'enroulement principal est monté articulé sur une structure fixe dudit véhicule automobile de façon à prendre au moins deux positions :
- une position de travail, dans laquelle il s'étend transversalement, sensiblement parallèlement à une banquette arrière dudit véhicule ; et
- une position de rangement, dans laquelle il s'étend sensiblement parallèlement à une première paroi latérale intérieure dudit véhicule.

Ainsi, l'invention repose sur une approche nouvelle et inventive consistant à prévoir un dispositif (ou store) caches-bagages dont le tube d'enroulement du rideau d'occultation principal peut basculer pour prendre une position de rangement dans laquelle il s'étend le long d'une paroi latérale interne du véhicule.

Ainsi, lorsque l'utilisateur souhaite augmenter le volume utile de l'espace destiné à recevoir les bagages (défini par le dossier de la banquette arrière, les bords latéraux du véhicule et l'arrière du véhicule pouvant être un hayon ou une ou des portes), il peut choisir de faire passer le dispositif dans l'état de rangement.

Dans la position de travail, le tube d'enroulement principal du rideau principal est monté transversalement par rapport au véhicule, généralement de façon qu'il s'étende le long d'une banquette arrière du véhicule. Le rideau d'occultation principal peut alors être déplié ou replié par l'utilisateur.

Le tube d'enroulement pourra par exemple être fixé au niveau d'une de ses extrémités à une structure fixe d'une paroi latérale, au voisinage de la banquette arrière. Les moyens de fixation sont tels qu'ils permettent un basculement d'environ 90° du tube d'enroulement principal de la position de travail à la position de rangement, et inversement.

Dans la position de rangement, le rideau principal est replié autour du tube d'enroulement principal et le basculement du tube d'enroulement le long d'une paroi latérale permet de libérer le dossier de la banquette, ce qui permet par exemple de charger un objet lourd sur la banquette lorsque celle-ci est rabattue, sans risque d'endommager le dispositif cache-bagages.

Le tube d'enroulement peut également être monté à l'intérieur d'un boîtier présentant une fente de passage du rideau lors de son déploiement et de son repliement. Dans ce cas, c'est le boîtier à l'intérieur duquel est monté le tube d'enroulement qui sera monté articulé au niveau d'une structure fixe du véhicule.

Avantageusement, ce passage de l'état de travail à l'état de rangement, et inversement, de l'état de rangement à l'état de travail, pourra être motorisé.

De façon préférée, le dispositif cache-bagages comprend un rideau d'occultation complémentaire monté sur un tube d'enroulement complémentaire, monté articulé sur une structure fixe dudit véhicule automobile de façon à prendre au moins deux positions :
- une position de travail, dans laquelle il s'étend sensiblement co-axialement avec ledit tube d'enroulement principal lorsque celui-ci est dans sa position de travail ; et
- une position de rangement, dans laquelle il s'étend sensiblement parallèlement à une seconde paroi latérale intérieure, dudit véhicule lesdits moyens de motorisation sont montés à l'intérieur dudit tube d'enroulement.

Ainsi, le dispositif cache-bagages est formé de deux rideaux d'occultation ; un rideau principal, et un rideau complémentaire, montés respectivement sur un tube d'enroulement principal et un tube d'enroulement complémentaire. Dans la position de travail, les deux tubes d'enroulement s'étendent de préférence le long du dossier de la banquette arrière, dans l'alignement l'un de l'autre.

La somme des longueurs de chacun des tubes d'enroulement principal et complémentaire est, avantageusement, sensiblement égale à la longueur de la banquette arrière (c'est-à-dire à la largueur du véhicule). Chacun des rideaux peut alors être déployé ou replié autour d'un des tubes d'enroulement indépendamment de la position de l'autre rideau, de façon que, lorsque les deux rideaux sont déployés, la totalité de l'espace destiné aux bagages soit recouvert par les rideaux et occulté.

L'utilisateur dispose alors d'une modularité d'occultation plus importante qu'avec les cache-bagages classiques connus dans l'art antérieur. L'un des rideaux d'occultation pouvant par exemple être déployé ou partiellement déployé tandis que l'autre est replié.

Lorsque les tubes d'enroulement principal et complémentaires prennent la position de rangement, deux modes de réalisation peuvent être envisagés.

Selon un premier mode de réalisation avantageux, le tube d'enroulement complémentaire bascule de la même façon que le tube d'enroulement principal, dans le sens opposé à celui-ci. Ainsi, chacun des tubes d'enroulement s'étend alors respectivement le long d'une première et d'une seconde paroi latérale intérieure du véhicule, opposées l'une par rapport à l'autre.

Cela permet de libérer le dossier de la banquette arrière et de répartir l'encombrement en position de rangement.

Le tube d'enroulement complémentaire pourra alors être monté articulé au niveau d'une structure fixe de la même manière que le tube d'enroulement principal, de l'autre côté du véhicule, et il pourra de la même façon être logé à l'intérieur d'un second boîtier.

Selon un second mode de réalisation avantageux, on peut également prévoir que le tube d'enroulement complémentaire en position de rangement ne s'étende pas le long de la seconde paroi, bien qu'il soit sensiblement parallèle à celle-ci, mais qu'il soit ramené contre le tube d'enroulement principal qui s'étend lui-même contre la première paroi interne du véhicule.

Selon ce mode de réalisation, on pourra prévoir que les deux tubes d'enroulement sont montés articulés l'un par rapport à l'autre (éventuellement via les boîtiers à l'intérieur desquels ils sont logés), de sorte qu'au moment du rangement du dispositif, le tube complémentaire soit ramené contre le tube d'enroulement principal selon une rotation de 180° environ et que les deux tubes d'enroulement accolés soient ensuite basculés selon un angle de 90° le long d'une des parois latérales, éventuellement à l'intérieur d'un logement ménagé à l'intérieur de celle-ci.

Préférentiellement, dans la position de rangement, au moins un des tubes d'enroulement pénètre au moins en partie dans un logement ménagé à cet effet dans la paroi latérale intérieure du véhicule.

Ainsi, lorsque le rideau est replié autour du tube d'enroulement et que celui-ci est basculé dans la position de rangement, il se loge à l'intérieur de la paroi latérale du véhicule.

Cela pourra être envisagé pour chacun des tubes d'enroulement et permet de protéger le dispositif lorsque celui-ci n'est pas utilisé. En outre, cela permet de libérer au maximum l'espace de chargement du véhicule lorsque cela est souhaité.

Lorsqu'un des tubes d'enroulement principal est logé à l'intérieur d'un boîtier, comme mentionné précédemment, on pourra prévoir que lors du basculement, le boîtier à l'intérieur duquel est logé le tube d'enroulement s'escamote à l'intérieur d'une paroi latérale du véhicule.

De façon avantageuse, le logement ménagé à l'intérieur de la paroi latérale est obturé par une palette, au moins lorsque le tube d'enroulement est dans la position de rangement (cela pourra bien sûr être envisagé pour chacun des logements).

La palette permet ainsi d'obturer le logement de façon que l'aspect esthétique de la paroi latérale soit convenable et de façon à éviter que des objets indésirables puissent être insérés à l'intérieur.

La palette pourra par exemple être montée articulée directement au niveau du logement ménagé dans la paroi latérale interne. Elle pourra alors obturer celui-ci lorsqu'un des tubes d'enroulement est en position de rangement à l'intérieur du logement, mais également lorsqu'il est en position de travail.

De façon avantageuse, on peut également prévoir que la palette soit articulée par rapport à un boîtier portant le tube d'enroulement. Dans ce cas, c'est lorsque le tube d'enroulement est en position de rangement à l'intérieur du logement que la palette permettra d'obturer celui-ci.

Avantageusement, on peut également prévoir que la palette forme une barre de tirage permettant le déploiement du rideau lorsque le tube d'enroulement est dans la position de travail. Dans ce cas, lorsque le rideau est replié et que le tube d'enroulement bascule, la barre de tirage formant palette équipant l'extrémité libre du rideau obturera le logement.

Dans ce cas, on pourra également prévoir que la palette formant la barre de tirage permette également d'obturer une fente de passage du rideau d'un boîtier dans lequel est logé le tube d'enroulement, lorsque le rideau est replié.

De façon préférée, le tube d'enroulement principal et le tube d'enroulement complémentaire sont de mêmes dimensions.

On peut cependant également prévoir que le tube d'enroulement principal s'étend sur sensiblement deux tiers de la largeur de ladite banquette arrière dudit véhicule et ledit tube d'enroulement complémentaire sur un tiers de la largeur de la banquette arrière du véhicule.

En particulier, lorsque la banquette arrière est formée de deux parties rabattables indépendamment l'une de l'autre, les dimensions respectives des deux tubes d'enroulement pourront être choisies de façon à être adaptées aux longueurs de chacune de ces parties rabattables. Ainsi, lorsqu'une seule partie de la banquette est rabattue, on pourra alors laisser le tube d'enroulement s'étendant le long de la partie non rabattue dans la position de travail de façon à continuer d'occulter une partie de l'espace-bagages.

Le fait que le dispositif cache-bagages soit formé de deux tubes d'enroulement dont la somme des longueurs correspond sensiblement à celle de la banquette arrière permet plus de souplesse quant à la mise en oeuvre du dispositif en fonction de la longueur des parois latérales internes le longs desquels les tubes d'enroulements sont basculés. En effet, des tubes d'enroulement s'étendant parallèlement à celles-ci doit être inférieure à la longueur des parois latérales.

De façon préférée, lesdits deux tubes d'enroulement et/ou leurs boîtiers respectifs comprennent des moyens de solidarisation l'un à l'autre dans ladite position de travail.

Le fait de solidariser les tubes d'enroulement ou les boîtiers les contenant permet d'augmenter la stabilité du dispositif caches-bagages et des tubes d'enroulement lorsque ceux-ci sont dans la position de travail.

On pourra également prévoir des moyens de fixation transitoire de l'extrémité non articulée des tubes d'enroulement au niveau du dossier de la banquette arrière, lorsque ceux-ci sont en position de travail, de façon à assurer plus de stabilité à chacun d'eux dans cette position.

De façon avantageuse, lesdits deux rideaux d'occultation et/ou leurs barres de tirage respectives comprennent des moyens de solidarisation l'un à l'autre dans ladite position de travail de façon que lesdits deux rideaux soient déployés simultanément.

Ainsi, le déploiement de l'ensemble des rideaux d'occultation sera facilité pour l'utilisateur lorsqu'il souhaite occulter totalement l'espace destiné aux bagages.

Préférentiellement, le repliement des rideaux d'occultation principal et complémentaire est assuré au moins en partie par des moyens de rappel, agissant sur lesdits tubes d'enroulement.

L'invention telle que présentée concerne également tout véhicule équipé d'un tel dispositif cache-bagages, la paroi interne du véhicule pouvant éventuellement comprendre au moins un logement destiné à recevoir au moins un desdits tubes d'enroulement.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 illustre de façon schématique l'arrière d'un véhicule automobile équipé d'un dispositif cache-bagages selon l'invention, les tubes d'enroulement principal et complémentaire étant dans la position de travail ;
- la figure 2 illustre le dispositif selon la figure 1 dans lequel les rideaux d'occultation principal et complémentaire sont repliés ;
- la figure 3 décrit un dispositif cache-bagages dont le tube d'enroulement principal est dans la position de rangement.

Le principe général de l'invention repose sur un dispositif cache-bagages dont le tube d'enroulement principal sur lequel est monté le rideau d'occultation principal est monté articulé au niveau du véhicule de façon qu'il puisse prendre une position de rangement dans laquelle il s'étend parallèlement et le long d'une première paroi latérale.

Selon une approche avantageuse de l'invention, le dispositif peut comprendre un second tube d'enroulement complémentaire, un rideau d'occultation complémentaire étant monté sur celui-ci. Le tube d'enroulement complémentaire est alors également monté articulé de façon à pouvoir prendre une position de rangement le long d'une second paroi opposée à la première.

Selon cette approche, les tubes d'enroulement sont dans l'alignement l'un de l'autre, et la longueur de chacun des tubes d'enroulement est inférieure à la longueur que présenterait un tube d'enroulement qui s'étendant sur toute la largeur du véhicule, et ceux-ci peuvent ainsi plus aisément être basculés le long des parois latérales.

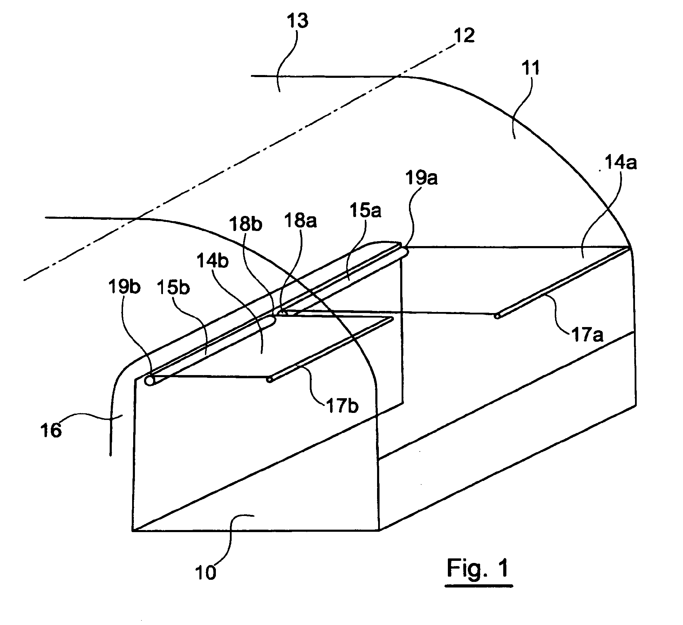

On présente en relation avec la figure 1, l'arrière d'un véhicule de type « monospace », présentant un hayon 11, articulé selon un axe 12 s'étendant au voisinage du pavillon 13. L'invention peut s'appliquer, plus généralement, à tout type de véhicule dans lequel on peut mettre en oeuvre un dispositif cache-bagages, et par exemple les véhicules de type break.

Tel que représenté par la figure 1, le dispositif cache-bagages comprend un tube d'enroulement principale 15a et un tube d'enroulement complémentaire 15b, chacun des tubes 15a, 15b étant dans la position de travail dans laquelle il s'étendent transversalement, sensiblement parallèlement à une banquette arrière 16 du véhicule.

Tels que représentés, les tubes d'enroulement principal 15a et complémentaire 15b sont de mêmes dimensions et s'étendent dans l'alignement l'un de l'autre. La somme des longueurs de chacun des tubes d'enroulement 15a, 15b est sensiblement égale à la longueur de la banquette arrière du véhicule 16.

Les extrémités 18a, 18b adjacentes l'une de l'autre des tubes d'enroulement principal 15a et complémentaire 15b peuvent être solidarisées lorsque que ceux-ci sont dans la position de travail, de façon qu'ils soient plus stables dans cette position.

Un rideau d'occultation principal 14a et un rideau d'occultation complémentaire 14b sont montés respectivement sur les tubes d'enroulement principal 15a et complémentaire 15b. L'extrémité libre de chacun des rideaux d'occultation 14a, 14b est équipée d'une barre de tirage 17a, 17b respectivement.

Les rideaux d'occultation 14a, 14b s'étendent chacun sensiblement horizontalement au-dessus de l'espace 10 destiné à recevoir les bagages.

Selon le mode de réalisation représenté, chacun des rideaux peut être déployé et replié indépendamment l'un de l'autre. Il sera cependant possible de prévoir des moyens de solidarisation de leur déploiement et de leur repliement en solidarisant les bords latéraux adjacents des rideaux 14a, 14b et/ou leur barre de tirage 17a, 17b lorsque cela est souhaitable.

Tel que représenté, le rideau principal 14a est totalement déployé et le rideau complémentaire 14b est partiellement déployé. Lorsque les deux rideaux 14a, 14b sont totalement déployés, l'espace 10 destiné aux bagages est totalement occulté.

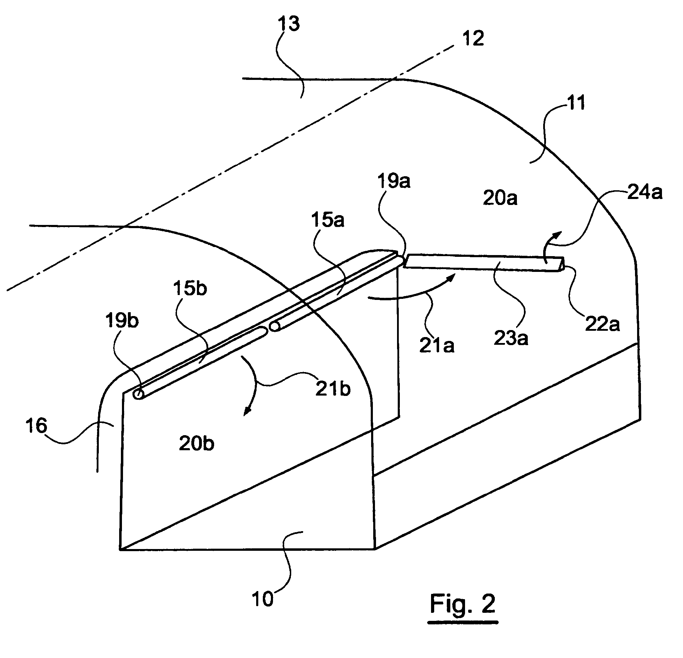

La figure 2 illustre le cache-bagages selon la figure 1 lorsque les rideaux d'occultation principal 14a et complémentaire 14b sont totalement repliés autour des tubes d'enroulement 15a, 15b respectivement.

Des références numériques identiques désignent des éléments identiques sur les figures 1, 2, 3, et 4.

Les tubes d'enroulement principal 15a et complémentaire 15b respectivement sont montés articulés au niveau d'une de leur extrémité 19a et 19b, sur une structure fixe du véhicule.

En particulier, les structures fixes sur lesquelles sont montées les extrémités 19a, 19b des tubes 15a et 15b peuvent faire partie intégrante, ou être solidaires, des parois latérales internes 20a, 20b du véhicule.

Les articulations au niveau des extrémités 19a, 19b permettent ainsi le basculement de chacun des tubes d'enroulement 15a, 15b selon la direction indiquée par les flèches 21a, 21b respectivement. Chacun des tubes d'enroulement 15a, 15b peut ainsi prendre une position de rangement, dans laquelle ils s'étendent respectivement le long des parois latérales internes 20a, 20b.

Une palette 23a montée articulée sur la paroi latérale interne 20a obture un logement 22a à l'intérieur duquel pourra être logé le tube d'enroulement principal 15a en position de rangement.

La palette 23a est basculée vers le haut selon la flèche 24a pour permettre l'introduction du tube d'enroulement principal 15a.

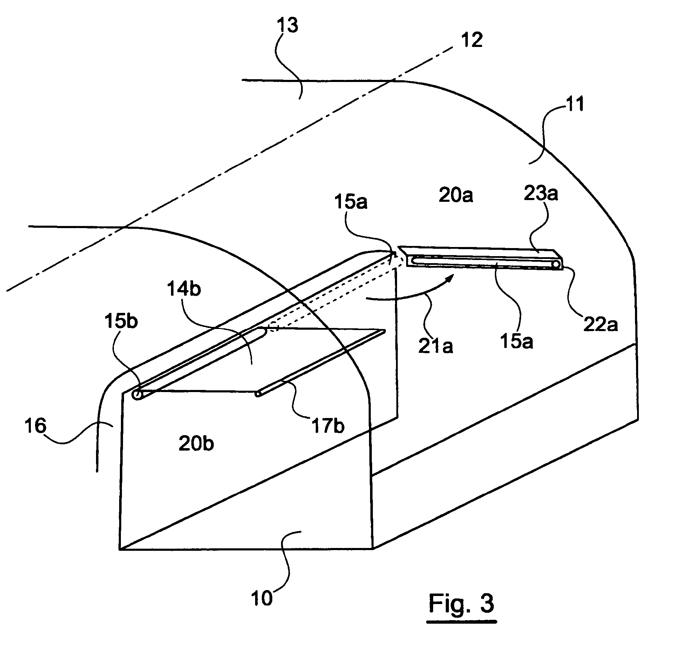

La figure 3 illustre le dispositif cache-bagages selon les figures 1 et 2, lorsque le tube d'enroulement complémentaire 15b est en position de travail, le rideau d'occultation complémentaire 14b étant partiellement déployé.

Le tube d'enroulement principal 15a a basculé de la position de travail (en pointillé) à la position de rangement selon la direction indiquée par la flèche 21 a.

Dans la position de rangement, le tube d'enroulement complémentaire est logé à l'intérieur du logement 22a ménagé à l'intérieur de la paroi latérale 20a.

La palette 23a pourra ensuite être rabattue, sous l'effet de son poids ou de moyens de rappel, de façon à camoufler le logement 22a et à empêcher l'introduction d'objets indésirables.

La paroi latérale interne 20b opposée pourra également présenter un logement permettant d'escamoter le tube d'enroulement complémentaire 15b en position de rangement, ainsi qu'une palette permettant de camoufler le logement.

Des moyens de fixation de l'un et l'autre des tubes d'enroulement (ou de boîtiers les contenant) pourront être prévus de façon à les maintenir temporairement dans la position de travail au niveau du dossier de la baquette arrière, et/ou dans la position de rangement au niveau des parois latérales.

## Revendications

1. Dispositif cache-bagages pour véhicule automobile comprenant au moins un rideau d'occultation principal (14a) monté sur un tube d'enroulement principal (15a), **caractérisé en ce que** ledit tube d'enroulement principal (15a) est monté articulé sur une structure fixe dudit véhicule automobile de façon à prendre au moins deux positions :
- une position de travail, dans laquelle il s'étend transversalement, sensiblement parallèlement à une banquette arrière (16) dudit véhicule ; et
- une position de rangement, dans laquelle il s'étend sensiblement parallèlement à une première paroi latérale intérieure (20a) dudit véhicule.

2. Dispositif selon la revendication 1, **caractérisé en ce qu**'il comprend un rideau d'occultation complémentaire (14b) monté sur un tube d'enroulement complémentaire (15b), monté articulé sur une structure fixe dudit véhicule automobile de façon à prendre au moins deux positions :
- une position de travail, dans laquelle il s'étend sensiblement co-axialement avec ledit tube d'enroulement principal (15a) lorsque celui-ci est dans sa position de travail ; et
- une position de rangement, dans laquelle il s'étend sensiblement parallèlement à une seconde paroi latérale intérieure (20b) dudit véhicule.

3. Dispositif selon l'une quelconque des revendications 1 et 2, **caractérisé en ce que** dans ladite position de rangement, au moins un desdits tubes d'enroulement (14a, 14b) pénètre au moins en partie dans au moins un logement (22a) ménagé à cet effet dans au moins une desdites parois latérales intérieures (20a, 20b).

4. Dispositif selon la revendication 3, **caractérisé en ce que** le ou lesdits logements (22a) sont obturés par au moins une palette (23a) , au moins dans ladite position de rangement.

5. Dispositif selon la revendication 4, **caractérisé en ce que** la ou lesdites palettes (23a) sont articulées par rapport à au moins un boîtier portant au moins un des tubes d'enroulement.

6. Dispositif selon l'une quelconque des revendications 4 et 5, **caractérisé en ce que** la ou lesdites palettes (23a) forment au moins une barre de tirage (17a, 17b) permettant le déploiement d'au moins un desdits rideaux (14a, 14b) dans ladite position de travail.

7. Dispositif selon l'une quelconque des revendications 2 à 6, **caractérisé en ce que** ledit tube d'enroulement principal (15a) et ledit tube d'enroulement complémentaire (15b) sont de mêmes dimensions.

8. Dispositif selon l'une quelconque des revendications 2 à 6, **caractérisé en ce que** ledit tube d'enroulement principal (15a) s'étend sensiblement sur deux tiers de la largeur de ladite banquette arrière (16) dudit véhicule et ledit tube complémentaire (15b) sur un tiers de ladite banquette arrière (16) dudit véhicule.

9. Dispositif selon l'une quelconque des revendications 2 à 8, **caractérisé en ce que** lesdits deux tubes d'enroulement (15a, 15b) et/ou leurs boîtiers respectifs comprennent des moyens de solidarisation l'un à l'autre dans ladite position de travail.

10. Dispositif selon l'une quelconque des revendications 2 à 9, **caractérisé en ce** lesdits deux rideaux d'occultation (14a, 14b) et/ou leurs barres de tirage (17a, 17b) respectives comprennent des moyens de solidarisation l'un à l'autre dans ladite position de travail de façon que lesdits deux rideaux (14a, 14b) soient déployés simultanément.

11. Véhicule automobile **caractérisé en ce qu**'il comprend un dispositif cache-bagages selon l'une quelconque des revendications 1 à 10.

12. Véhicule automobile selon la revendication 11, **caractérisé en ce qu**'il comprend au moins un logement (22a) destiné à recevoir au moins un desdits tubes d'enroulement (15a, 15b).

## Claims

1. A load space cover device for an automotive vehicle comprising at least one main blind cover screen (14a) mounted on a main roller tube (15a), **characterised in that** said main roller tube (15a) is mounted in hinged manner on a fixed structure of said automotive vehicle in such a way as to have at least two positions:
- a working position, in which it extends transversely and substantially parallel to a rear bench seat (16) of said vehicle, and
- a storage position, in which it extends substantially parallel to a first internal side wall (20a) of said vehicle.

2. A device according to claim 1, **characterised in that** it comprises a supplementary blind cover screen (14b) mounted on a supplementary roller tube (15b), mounted in hinged manner on a fixed structure of said automotive vehicle in such a way as to have at least two positions:
- a working position, in which it extends substantially coaxially with said main roller tube (15a) when the latter is in its working position, and
- a storage position, in which it extends substantially parallel to a second internal side wall (20b) of said vehicle.

3. A device according to either one of claims 1 and 2, **characterised in that**, in said storage position, at least one of said roller tubes (14a, 14b) penetrates at least in part into at least one case (22a) formed for this purpose in at least one of said internal side walls (20a, 20b).

4. A device according to claim 3, **characterised in that** said case(s) (22a) are closed up by at least one flap (23a), at least in said storage position.

5. A device according to claim 4, **characterised in that** said flap(s) (23a) are hinged relative to at least one housing carrying at least one of the roller tubes.

6. A device according to either one of claims 4 and 5, **characterised in that** said flap(s) (23a) form at least one pull bar (17a, 17b) allowing unrolling of at least one of said screens (14a, 14b) in said working position.

7. A device according to any one of claims 2 to 6, **characterised in that** said main roller tube (15a) and said supplementary roller tube (15b) have the same dimensions.

8. A device according to any one of claims 2 to 6, **characterised in that** said main roller tube (15a) extends substantially over two thirds of the width of said rear bench seat (16) of said vehicle and said supplementary tube (15b) over one third of said rear bench seat (16) of said vehicle.

9. A device according to any one of claims 2 to 8, **characterised in that** said two roller tubes (15a, 15b) and/or their respective housings comprise means of connecting one to the other in said working position.

10. A device according to any one of claims 2 to 9, **characterised in that** two said blind cover screens (14a, 14b) and/or their respective pull bars (17a, 17b) comprise means of connecting one to the other in said working position in such a way that said two screens (14a, 14b) are unrolled simultaneously.

11. An automotive vehicle, **characterised in that** it comprises a load space cover device according to any one of claims 1 to 10.

12. An automotive vehicle according to claim 11, **characterised in that** it comprises at least one case (22a) designed to receive at least one of said roller tubes (15a, 15b).

## Patentansprüche

1. Laderaumabdeckvorrichtung für ein Kraftfahrzeug, bestehend aus mindestens einem Hauptabdeckvorhang(14a), das an einem Hauptwickelrohr (15a) montiert ist, **dadurch gekennzeichnet, dass** das vorgenannte Hauptwickelrohr (15a) an einer festen Struktur des vorgenannten Kraftfahrzeugs angelenkt ist, so dass es mindestens zwei Positionen einnehmen kann:
- eine Arbeitsposition, in der es sich annähernd parallel zu einer Fondsitzbank (16) des vorgenannten Fahrzeuges erstreckt; und
- eine Wegräumposition, in der es sich annähernd parallel zu einer ersten seitlichen Innenwand (20a) des vorgenannten Fahrzeugs erstreckt.

2. Vorrichtung gemäß Anspruch 1,
**dadurch gekennzeichnet, dass** sie einen zusätzlichen Abdeckvorhang (14b) umfasst, das an einem zusätzlichen Wickelrohr (15b) montiert ist, das an einer festen Struktur des vorgenannten Kraftfahrzeugs angelenkt ist, so dass es mindestens zwei Positionen einnehmen kann:
- eine Arbeitsposition, in der es sich annähernd koaxial zur vorgenannten Hauptwickelrohr (15a) erstreckt, wenn diese in ihrer Arbeitsposition ist; und
- eine Wegräumposition, in der es sich annähernd parallel zu einer zweiten seitlichen Innenwand (20b) des vorgenannten Fahrzeugs erstreckt.

3. Vorrichtung gemäß einem der Ansprüche 1 und 2,
**dadurch gekennzeichnet, dass** in der vorgenannten Wegräumposition mindestens eine der vorgenannten Wickelröhre (14a, 14b) zumindest teilweise in mindestens einen Behälter (22a) eintritt, der zu diesem Zweck in mindestens einer der vorgenannten seitlichen Innenwände (20a, 20b) ausgebildet ist.

4. Vorrichtung gemäß Anspruch 3,
**dadurch gekennzeichnet, dass** der vorgenannte Behälter oder die vorgenannten Behälter (22a) von mindestens einem Flügel (23a) vorübergehend geschlossen werden, zumindest in der vorgenannten Wegräumposition.

5. Vorrichtung gemäß Anspruch 4,
**dadurch gekennzeichnet, dass** der vorgenannte oder die vorgenannten Flügel (23a) in Bezug auf mindestens ein Gehäuse, in dem sich mindestens eine der Wickelröhre befindet, angelenkt sind.

6. Vorrichtung gemäß einem der Ansprüche 4 und 5,
**dadurch gekennzeichnet, dass** der vorgenannte oder die vorgenannten Flügel (23a) mindestens eine Zugstrebe (17; 17b) bilden, um den Auszug von mindestens einem der vorgenannten Vorhänge (14; 14b) in die vorgenannte Arbeitsposition zu erlauben.

7. Vorrichtung gemäß einem der Ansprüche 2 bis 6,
**dadurch gekennzeichnet, dass** das vorgenannte Hauptwickelrohr (15a) und das vorgenannte zusätzliche Wickelrohr (15b) die gleichen Abmessungen haben.

8. Vorrichtung gemäß einem der Ansprüche 2 bis 6,
**dadurch gekennzeichnet, dass** das vorgenannte Hauptwickelrohr (15a) sich annähernd auf zwei Dritteln der Breite der vorgenannten Fondsitzbank (16) des vorgenannten Fahrzeugs erstreckt und das vorgenannte zusätzliche Wickelrohr (15b) sich auf einem Drittel der vorgenannten Fondsitzbank (16) des vorgenannten Fahrzeugs erstreckt.

9. Vorrichtung gemäß einem der Ansprüche 2 bis 8,
**dadurch gekennzeichnet, dass** die beiden vorgenannten wickelröhre (15a, 15b) und/oder ihre jeweiligen Gehäuse über Mittel für die Befestigung untereinander in der vorgenannten Arbeitsposition verfügen.

10. Vorrichtung gemäß einem der Ansprüche 2 bis 9,
**dadurch gekennzeichnet, dass** die beiden vorgenannten Abdeckvorhänge (14a, 14b) und/oder ihre jeweiligen Zugstreben (17a; 17b) über Mittel für die Befestigung untereinander in der vorgenannten Arbeitsposition verfügen, so dass die beiden vorgenannten Vorhänge (14a; 14b) simultan ausgezogen werden.

11. Kraftfahrzeug,
**dadurch gekennzeichnet, dass** es eine Laderaumabdeckvorrichtung gemäß einem der Ansprüche 1 bis 10 umfasst.

12. Kraftfahrzeug gemäß Anspruch 11,
**dadurch gekennzeichnet, dass** es mindestens einen Behälter (22a) für mindestens eine der vorgenannten wickelröhre (15a, 15b) umfasst.
